# EUROPÄISCHE PATENTSCHRIFT

(11) **EP 3 541 853 B1**
(45) Veröffentlichungstag und Bekanntmachung des Hinweises auf die Patenterteilung: **26.07.2023**
(21) Anmeldenummer: 17788120.8
(22) Anmeldetag: 02.10.2017
(51) Int. Cl.: B29C 45/14, B29C 33/06, B29C 67/24, C08G 69/16

(54) **HERSTELLUNSVERFAHREN EINER DAUERHAFT DICHTENDEN VERBINDUNG ZWISCHEN EINLEGER UND POLYMER**
PRODUCTION METHOD OF A DURABLY SEALING CONNECTION BETWEEN INLAY AND POLYMER
PROCÉDÉ DE RÉALISATION D'UNE LIAISON ÉTANCHE DURABLE ENTRE UN INSERT ET UN POLYMÈRE

(30) Priorität: 16.11.2016 DE 102016222534
(43) Veröffentlichungstag der Anmeldung: 25.09.2019
(73) Patentinhaber: Robert Bosch GmbH, 70442 Stuttgart (DE)
(72) Erfinder: ROMAN, Victor, 70567 Stuttgart (DE); BEIERMEISTER, Bernd, 71711 Steinheim-Kleinbottwar (DE); LUNG, Norman, 71384 Weinstadt (DE); MENACHER, Markus, 74379 Ingersheim (DE); JAHNLE, Hendrik, 71397 Leutenbach (DE)
(86) Internationale Anmeldenummer: PCT/EP2017/074945
(87) Internationale Veröffentlichungsnummer: WO 2018/091188

(56) Entgegenhaltungen:
- EP-A1- 0 214 815
- WO-A1-91/08958
- AT-U1- 11 396
- JP-A- H11 105 076
- US-A1- 2004 188 427

## Beschreibung

Die vorliegende Erfindung betrifft ein Verfahren zur dauerhaft dichtenden Verbindung eines, insbesondere metallischen, Einlegers mit einem diesen Einleger umgebenden Polymer, insbesondere für elektrische Durchführungen durch Kunststoffgehäuse.

### Stand der Technik

Elektronische Komponenten, wie Leiterbahnen, Sensoren und Platinen, sind vielfach in Kunststoffträger eingebettet oder in Kunststoffgehäusen untergebracht. Damit die Komponenten ihre Funktion erfüllen können, wird eine elektrische Durchführung einer metallischen Leitung durch den Träger, bzw. das Gehäuse, benötigt.

Hierbei ergibt sich grundsätzlich das Problem, dass Metall und Kunststoff unterschiedliche Schwindungen aufweisen. Bei Temperaturwechseln im Betrieb, oder auch schon beim Umspritzen des Metalls mit heißem Kunststoff und anschließendem Abkühlen des Kunststoff, kann sich der Kunststoff vom Metall lösen. Die entstehenden Spalte beeinträchtigen die Dichtwirkung des Trägers bzw. Gehäuses, so dass beispielsweise Wasser eindringen und die elektronischen Komponenten durch Kurzschluss außer Funktion setzen kann.

Es sind verschiedene Ansätze bekannt, diesem Problem zu begegnen. Durch das Anbringen zusätzlicher Dichtungen, wie beispielsweise aus der DE 20 2006 013 243 U1 bekannt, kann die Konstruktion so geändert werden, dass Spalte toleriert werden können. Beispielsweise können Elastomere angespritzt werden, die nach der Art eines O-Rings das Metall stets dicht umschließen. Die DE 103 13 832 A1 offenbart, Spalte mit Schmelzkleber zu versiegeln. Die DE 10 2005 033 912 B3 offenbart, durch Mikro-Laser-Strukturierung sowie durch galvanische Prozesse die Bindung zwischen Metall und Kunststoff zu verbessern. Die EP 1 202 852 B1 offenbart, das Metall so zu formen, dass es bei Temperaturänderungen durch den Kunststoff eingezwängt wird und den Spalt in mindestens einem Abschnitt abdichtet. Die AT 11 396 U1 offenbart ein Verfahren zur Herstellung einer Verbund- oder Hybridkonstruktion. Die EP 0 214 815 A1 offenbart ein Verfahren zur Polymerisation und die WO 91/08958 A1 offenbart ein Verfahren zur Herstellung eines Behälters, wobei Bauteile induktiv erwärmt werden.

### Offenbarung der Erfindung

Im Rahmen der Erfindung wurde ein Verfahren zur Herstellung einer Verbindung zwischen einem Einleger und einem den Einleger zumindest teilweise umgebenden Polymer entwickelt. Dabei wird ein Monomer mit dem Einleger in Kontakt gebracht und anschließend zu dem Polymer polymerisiert.

Das Monomer kann hierbei insbesondere als Gemisch mit einem Katalysator und/oder einem Aktivator, die die Polymerisation starten und/oder unterhalten, vorliegen. Das Monomer kann aber auch einkomponentig sein. Im Monomer können beispielsweise ein Katalysator, und/oder ein Aktivator, chemisch gebunden sein und bei Überschreiten der für die Polymerisation erforderlichen Temperatur freigesetzt werden. Da die Zusammensetzung des Monomers nicht Gegenstand der Erfindung ist, ist im Folgenden nur noch vom "Monomer" die Rede.

Das Monomer kann insbesondere Caprolactam sein, das zu Polyamid-6 (PA6) polymerisiert.

Die Temperatur T_{E} des Einlegers wird zumindest kurzzeitig mindestens auf diejenige Temperatur T_{M} erhöht, die das Monomer während seiner exothermen Polymerisation zu dem Polymer maximal annimmt, und/oder die sicherstellt, dass der Wärmestrom immer vom Einleger zum Monomer verläuft.

Es wurde erkannt, dass für eine optimale Haftung des Polymers am Einleger entscheidend ist, dass das Monomer speziell an der Kontaktfläche zum Einleger vollständig zum Polymer umgewandelt, also polymerisiert, ist. Zwei Effekte an dieser Kontaktfläche können die Polymerisation stören:
Zum einen können Monomer, Aktivator oder Katalysator mit dem Material des Einlegers wechselwirken, wodurch die Polymerisation entweder verhindert, verlangsamt oder zu früh abgebrochen wird. Dies kann entweder durch das deaktivieren von aktiven Kettenenden während der Polymerisation oder durch das Deaktivieren von Aktivator oder Katalysator während oder vor der Polymerisation stattfinden. Die Deaktivierung entsteht typischerweise durch eine Redoxreaktion zwischen Einleger und Monomer, Aktivator oder Katalysator (insbesondere bei Metallen) oder durch freie Protonen welche die Reaktion deaktivieren, in Fachkreisen auch "quenchen" genannt.

Zum anderen kann durch die Wärmeleitfähigkeit des Einlegers der Polymerisation Energie entzogen werden.

Aufgrund der Redoxpotentiale vom Metallen in Verbindung mit einer hohen Wärmeleitfähigkeit, war es bislang nur sehr aufwendig möglich, ein Monomer, das in Kontakt mit einem Metall mit freien Ionen stand, vollständig anionisch zu polymerisieren.

Es wurde erkannt, dass die Temperaturerhöhung des Einlegers überraschenderweise beiden Störfaktoren gleichzeitig entgegenwirkt. Gerade die Erhöhung mindestens auf T_{M} stellt sicher, dass ein eventueller Wärmestrom zwischen Einleger und Monomer immer vom Einleger zum Monomer verläuft, also der Polymerisation Energie nur zuführt und nicht entzieht. Diese Energiezufuhr bewirkt wiederum, dass die Affinität der Monomer-Moleküle zur Bindung aneinander erhöht ist. Für ein gegebenes Monomer-Molekül ist damit die Wahrscheinlichkeit, dass es sich an ein anderes Monomer-Molekül bindet, gegenüber der Wahrscheinlichkeit, dass es unerwünscht mit einem Ion des Einlegers wechselwirkt, vorteilhaft erhöht. Im Ergebnis polymerisiert das Monomer vollständig durch und haftet besonders gut an dem Einleger. Die bei einer unterschiedlichen Schwindung von Einleger und Polymer wirkende Scherkraft auf die Kontaktfläche zwischen Einleger und Polymer wird somit auf das Volumen des Polymers übertragen und dort verteilt, so dass es nicht zu einer Spaltbildung zwischen Einleger und Polymer kommt.

Die Temperatur des Einlegers wird erhöht, nachdem der Einleger in Kontakt mit dem Monomer gebracht worden ist. Dies kann beispielsweise in einem Zeitraum zwischen 1 s und 30 s, bevorzugt in einem Zeitraum von weniger als 1 s, erfolgen. Die gewählte Temperatur kann beispielsweise mindestens 10 K, bevorzugt 20-40 K, über T_{M} liegen. Dann wird einerseits die Polymerisation des Monomers optimal beschleunigt, und andererseits wird das Monomer nicht thermisch degradiert. Die Polymerisation selbst kann weniger als 30 s, oder auch zwischen 30 s und 4 min, dauern.

Der Einleger kann aber auch schon im geheizten Zustand in Kontakt mit dem Monomer gebracht werden. Dann ist der apparative Aufbau einfacher um den Preis, dass während der Polymerisation keine weitere Wärme zugeführt werden kann. Um diesbezüglich eine Reserve für unvermeidliche Wärmeverluste zu haben, wird die Temperatur des Einlegers vorteilhaft auf 30-50 K über T_{M} erhöht.

Da es für die Aufnahme der Scherkraft speziell auf die Festigkeit der Kontaktfläche zwischen Einleger und Polymer ankommt, wird in einer besonders vorteilhaften Ausgestaltung der Erfindung die Temperatur T_{E} des Einlegers mindestens so lange auf oder oberhalb der Temperatur T_{M} gehalten wird, bis das Monomer zumindest entlang seiner kompletten Kontaktfläche zu dem Einleger polymerisiert ist.

Dies hat den weiteren Effekt, dass die Kontaktfläche im Folgenden als Barriere sowohl gegen den Abfluss von Wärme in den Einleger als auch gegen die Wechselwirkung von Ionen des Einlegers mit Monomer-Molekülen wirkt. Ist die Barriere erst einmal hergestellt, ist die erhöhte Temperatur nicht mehr im bisherigen Umfang notwendig. Vorteilhaft wird daher die Temperatur T_{E} des Einlegers unter die Temperatur T_{M} abgesenkt, nachdem das Monomer entlang seiner kompletten Kontaktfläche zu dem Einleger polymerisiert ist.

Auf diese Weise können insbesondere empfindliche elektronische Bauelemente als Einleger geschont werden. Je kürzer die Temperaturbeanspruchung, desto höher darf die Temperatur sein.

Gerade bei der Durchführung elektrischer Energie oder elektrischer Signale durch einen isolierenden Träger oder ein isolierendes Gehäuse kommt es darauf an, dass die Verbindung dicht ist, um beispielsweise Kurzschlüsse durch das Eindringen von Feuchtigkeit zu vermeiden. Bei implantierbaren elektronischen Körperhilfen kommt es weiterhin darauf an, dass in Verbindung mit Körperflüssigkeiten keine schädlichen Stoffe in den Körper entweichen. Speziell bei diesen Anwendungen ist der Einleger zumindest teilweise elektrisch leitend oder halbleitend.

Der Einleger ist zumindest teilweise elektrisch leitend oder halbleitend und wird erfindungsgemäß durch Beaufschlagung mit einem Strom resistiv, und/oder induktiv, geheizt. Auf diese Weise kann speziell die Kontaktfläche des Einlegers zum Monomer, die für die dauerhaft dichte Verbindung so wichtig ist, besonders schnell auf die Temperatur T_{M} gebracht und ebenso schnell auch wieder abgekühlt werden. Der Einleger kann insbesondere Kupfer, Kupferzinnlegierungen, Zinn, Aluminium, Eisen oder eine Eisenlegierung enthalten. Diese Metalle haben sehr unterschiedliche chemische Potentiale und damit auch sehr unterschiedliche ionische Aktivitäten. Ungeachtet dessen bewirkt die Temperaturerhöhung auf T_{M}, dass die störende Wechselwirkung dieser ionischen Aktivitäten mit dem Monomer unterbunden wird.

In einer weiteren besonders vorteilhaften Ausgestaltung der Erfindung wird der Einleger in das Monomer eingetaucht, wobei mindestens ein Bereich auf der Oberfläche des Einlegers, der nicht mit dem Polymer umgeben werden soll, mit einem Abweiser abgedeckt wird. Der Einleger kann insbesondere im auf die Temperatur T_{M} beheizten Zustand in das Monomer eingetaucht werden. An der Kontaktfläche des Einlegers zum Monomer wird dann überall dort, wo er nicht mit dem Abweiser abgedeckt ist, das Monomer zum Polymer polymerisieren. Somit wird der Einleger dort mit einer Schicht aus dem Polymer überzogen, wobei die Schichtdicke von der Temperatur des Einlegers und von der Eintauchzeit abhängt. Der Einleger kann insbesondere mehrfach eingetaucht werden. Der Einleger kann auch nach dem Herausziehen aus dem Bad mit dem Monomer weiterhin beheizt werden, um die Polymerisation abzuschließen.

Zur Unterstützung der Haftung des Polymers kann der Einleger vorteilhaft strukturiert werden, insbesondere mit Hinterschnitten. Wenn das Monomer in diese Hinterschnitte eindringt und anschließend polymerisiert wird, bildet sich eine formschlüssige Verbindung des Polymers mit dem Einleger.

Die Erfindung bezieht sich auch auf verschiedene Verfahren zur dichtenden Integration eines Einlegers in ein Bauteil, die gegenüber dem Stand der Technik jeweils dadurch verbessert sind, dass an mindestens einer bestimmten Stelle das zuvor beschriebene Verfahren zur Herstellung einer Verbindung zwischen dem Einleger und einem Polymer angewendet wird.

Ein erstes Verfahren zur dichtenden Integration eines Einlegers in ein Bauteil zeichnet sich dadurch aus, dass der Einleger gemäß dem zuvor beschriebenen Verfahren mit einem Polymer umgeben und anschließend in das Bauteil eingeschossen wird. Das Einschießen eines Elements in ein Bauteil ist in der Fertigungstechnik als "Stitching" bekannt und kann auch in unveränderter Form fortgeführt werden. Es wird lediglich der Einleger vor dem Einschießen mit dem Polymer umgeben und insofern zu einem Halbzeug aufgewertet.

Die Dichtwirkung zwischen dem Einleger und dem Bauteil kann beispielsweise schon dadurch hergestellt werden, dass das Polymer durch die Kinetik, bzw. durch elastische Spannungen, beim Einschießen verformt wird. Die Dichtwirkung kann beispielsweise noch dadurch unterstützt werden, dass das Polymer anschließend teilweise aufgeschmolzen und auf diese Weise dichtend mit dem Bauteil verbunden wird, wie beispielsweise durch Laserstrahlschweißen.

Die Verbindung des Einlegers mit dem Polymer kann aber auch unabhängig von der Dichtwirkung die Reproduzierbarkeit des Einschießens erhöhen. Hierzu kann vorteilhaft das Bauteil mit einem definierten Anschlag für das Polymer versehen sein. Unabhängig davon, welche Verformungskräfte zwischen dem Einleger und dem Bauteil wirken, dringt der Einleger dann immer gleich tief in das Bauteil ein.

Bei einem zweiten Verfahren zur dichten Integration eines Einlegers in ein Bauteil wird der Einleger in eine Gussform für die Herstellung des Bauteils eingeführt und durch eine Kombination aus Umspritzen mit einem Kunststoff und Umgeben mit einem Polymer gemäß dem eingangs beschriebenen Verfahren dichtend mit dem aus dem Kunststoff entstehenden Bauteil verbunden. Dabei sind verschiedene Ausgestaltungen bezüglich der Reihenfolge, in der diese Schritte erfolgen, möglich. Das Umspritzen kann insbesondere durch Spritzgießen in eine Spritzgussform erfolgen. Dabei kann der Kunststoff auch stofflich identisch mit dem Polymer sein.

Der Einleger kann, wie eingangs beschrieben, vor dem Einführen in die Gussform mit dem Polymer umgeben werden. Kommt der solchermaßen aufgewertete Einleger anschließend beim Umspritzen in Kontakt mit heißem Kunststoff, wird das Polymer teilweise angeschmolzen. Die Schmelze bildet in Verbindung mit dem Kunststoff nach dem Erstarren eine dauerhaft dichte Verbindung zu dem aus dem Kunststoff entstandenen Bauteil. Der Kunststoff hat vorteilhaft einen etwas höheren Schmelzpunkt als das Polymer, mit dem der Einleger umgeben ist.

Der Einleger kann alternativ aber auch vor dem Einführen in die Gussform lediglich mit dem noch unpolymerisierten Monomer umgeben werden. In dieser Ausgestaltung des Verfahrens wird bei oder nach dem Zuführen des Kunststoffs für das Umspritzen die Temperatur des Einlegers mindestens auf T_{M} erhöht, um das Monomer zu dem Polymer zu polymerisieren. Dabei kann insbesondere die Temperatur des Kunststoffs als Wärmequelle für die Heizung des Einlegers verwendet werden. Dabei kann je nach Art des Kunststoffs, aus dem das Bauteil gefertigt werden soll, die für das Gießen, insbesondere für das Spritzgießen, erforderliche Temperatur sogar so hoch sein, dass es vorteilhaft oder gar erforderlich ist, zugleich den Einleger zu kühlen, damit weder der Einleger noch das Monomer überhitzt wird.

Bei einem dritten Verfahren zur dichten Integration eines Einlegers in ein Bauteil wird der Einleger mit dem Bauteil zusammengefügt und anschließend nach dem eingangs beschriebenen Verfahren mit einem Polymer verbunden. Das Bauteil kann in bekannter Weise gefertigt werden, beispielsweise durch Spritzguss oder auch durch 3D-Druck. Auch das Zusammenfügen des Einlegers mit dem Bauteil kann in bekannter Weise erfolgen, beispielsweise durch Einschießen ("Stitching"). Die Neuerung ist, dass der Einleger mit dem Monomer in Kontakt gebracht wird und dieses Monomer anschließend wie eingangs beschrieben polymerisiert wird, um die dichtende Verbindung herzustellen. Auf diese Weise wird der Aufwand für die Umrüstung bestehender Anlagen minimiert.

In einer besonders vorteilhaften Ausgestaltung dieses Verfahrens wird das Monomer über einen durch das Innere des Bauteils verlaufenden Kanal mit dem Einleger in Kontakt gebracht. Dieser Kanal kann insbesondere bereits bei der Herstellung des Bauteils vorgesehen werden. Auf diese Weise kann die Umrüstung auf das Verfahren gemäß der Erfindung im Wesentlichen in das Bauteil selbst verlagert werden.

Das Zusammenfügen des Einlegers mit dem Bauteil setzt nicht voraus, dass zu diesem Zeitpunkt das Bauteil bereits vollständig fertiggestellt ist. Der Einleger kann auch bereits während der Herstellung des Bauteils mit dem Bauteil zusammengefügt werden.

Beispielsweise wird in einer besonders vorteilhaften Ausgestaltung des Verfahrens das Bauteil durch 3D-Druck um den Einleger herum aufgebaut. Dabei wird um den Einleger herum ein Raum zur Aufnahme des Monomers freigelassen, und das Monomer wird in diesen Raum eingebracht. Dann ist es prinzipiell freigestellt, ob das Monomer erst nach Beendigung des 3D-Drucks in Kontakt mit dem Einleger gebracht wird oder ob beispielsweise während der Polymerisation des Monomers zu dem Polymer der 3D-Druck des Bauteils fortgesetzt wird.

Das erfindungsgemäße Verfahren kann durch eine Vorrichtung zur Durchführung des Verfahrens zur Verbindung des Einlegers mit dem Polymer ausgeführt werden. Diese Vorrichtung umfasst beispielsweise einen Förderer für ein Stanzgitter, in dem eine Vielzahl von Einlegern zuführbar ist, sowie eine mindestens zweiteilige Form, die um einen einzelnen Einleger schließbar ist und eine Zuführung für das Monomer in den Raum zwischen der Form und dem Einleger aufweist. Beispielsweise ist eine Stromzuführung für die resistive, und/oder induktive, Heizung des von der Form umgebenen Einlegers vorgesehen.

Auf diese Weise kann lediglich durch die Hinzufügung der Stromzuführung bewirkt werden, dass das durch Umwandlung des Monomers entstandene Polymer sich deutlich fester insbesondere mit metallischen Einlegern verbinden lässt als bislang möglich.

Die Stromzuführung speziell für die induktive Heizung kann insbesondere ohne direkten Kontakt erfolgen. Sie kann beispielsweise mindestens eine Spule enthalten.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 und einer Vorrichtung 50 zu dessen Durchführung;
Figur 2 Ausführungsbeispiel des Verfahrens 100 mit Abdeckung 112 eines Bereichs 1b auf dem Einleger 1 durch einen Abweiser 4.
Figur 3 Ausführungsbeispiel des Verfahrens 200 mit Einschießen 210 des Einlegers 1.
Figur 4 Kombination des Verfahrens 100 mit Spritzgießen im Verfahren 300.
Figur 5 Ausführungsbeispiel des Verfahrens 400 unter Verwendung eines Bauteils 5 mit Kanal 5c für das Monomer 2.
Figur 6 Abwandlung des in Figur 5 gezeigten Verfahrens 400 mit 3D-Druck 411 des Bauteils 5.
Figur 7 Einbringen von Strukturen 1f in den Einleger 1 zur Herstellung einer formschlüssigen Verbindung mit dem Polymer 3.

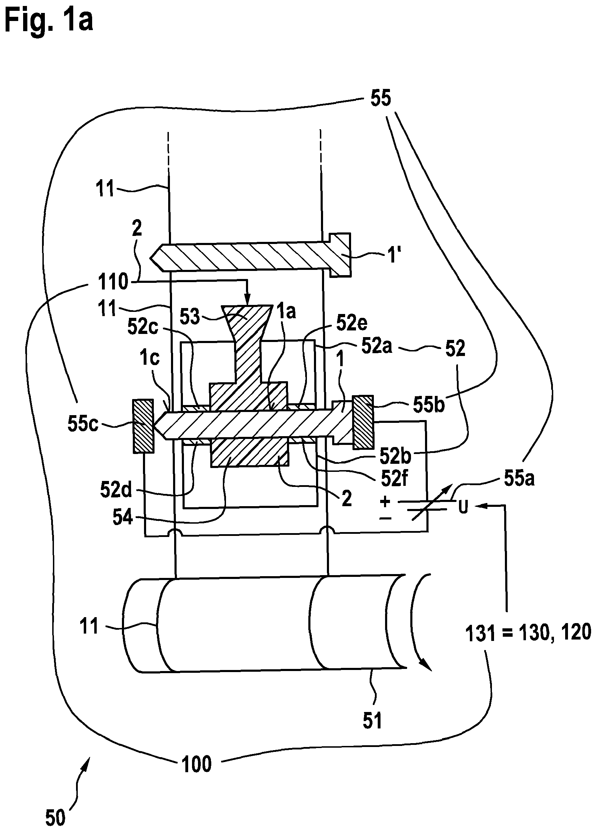

Nach Figur 1a umfasst die Vorrichtung 50 zur Durchführung des Verfahrens 100 einen Förderer 51, der ein Stanzgitter 11 mit einer Vielzahl von hier als metallischen Pins ausgebildeten Einlegern 1, 1', 1" von oben nach unten fördert und nach Abgabe der Einleger 51 aufwickelt. In Figur 1a sind ein Einleger 1, der im aktuellen Arbeitszyklus der Vorrichtung 50 bearbeitet wird, und ein weiterer Einleger 1', dessen Bearbeitung im nächsten Arbeitszyklus der Vorrichtung 50 ansteht, eingezeichnet.

Der Einleger 1 wird in die Form 52 eingebracht, die aus zwei Teilen 52a und 52b besteht. Wenn die beiden Teile 52a und 52b der Form 52 um den Einleger geschlossen werden, bildet sich zwischen ihnen ein Raum 54 für die Aufnahme des Monomers 2. Dieser Raum 54 umläuft den Einleger 1 und definiert zugleich den Teil 1a der Oberfläche 1c des Einlegers 1, der die Kontaktfläche mit dem Monomer 2 bildet. Links von dem Raum 54 ist der Einleger 1 zwischen der zum Teil 52a der Form 52 gehörenden Backe 52c und der zum Teil 52b der Form 52 gehörenden Backe 52d eingespannt. Rechts von dem Raum 54 ist der Einleger 1 zwischen der zum Teil 52a der Form 52 gehörenden Backe 52e und der zum Teil 52b der Form 52 gehörenden Backe 52f eingespannt.

In dieser Position hat der Einleger 1 Kontakt mit den Elektroden 55b und 55c, die gemeinsam mit einer regelbaren Spannungsquelle 55a die Stromzuführung 55 bilden. An Stelle der Elektroden 55b und 55c kann auch eine induktive Stromzuführung 55 verwendet werden.

Nachdem im Schritt 110 des Verfahrens 100 das Monomer 2 durch die Zuführung 53 zugeführt worden ist, wird durch Anlegen einer geeigneten Spannung U im Schritt 131 der Einleger 1 resistiv geheizt. Die Temperatur T_{E} des Einlegers 1 wird über T_{M} erhöht und somit Schritt 130 des Verfahrens 100 abgearbeitet. Hierdurch wiederum wird bewirkt, dass das Monomer 2 in Schritt 120 des Verfahrens 100 zum Polymer 3 polymerisiert.

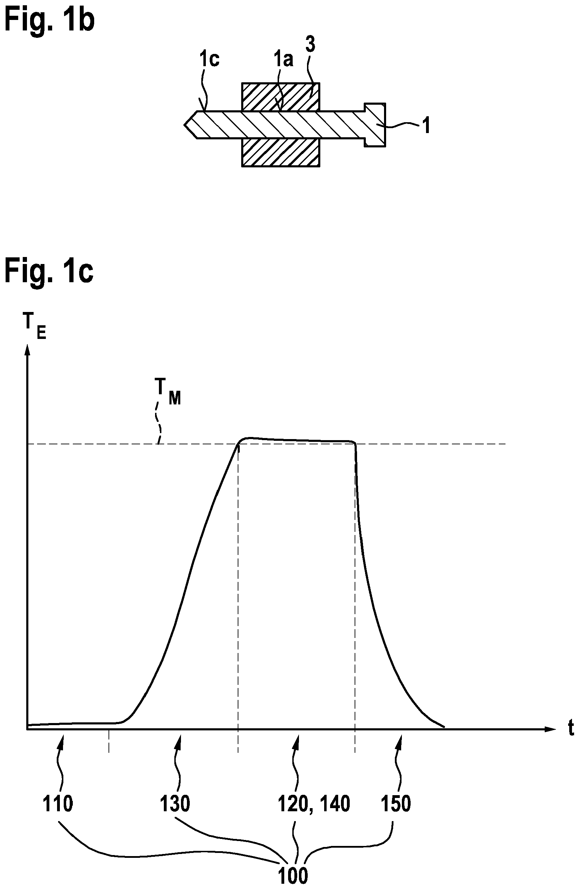

Figur 1b zeigt das erhaltene Ergebnis. Entlang der Kontaktfläche 1a, die einen Teil der Oberfläche 1c des Einlegers 1 bildet, ist der Einleger 1 fest mit dem aus dem Monomer 2 entstandenen Polymer 3 verbunden.

Figur 1c zeigt einen beispielhaften Verlauf der Temperatur T_{E} des Einlegers 1 über der Zeit t. Während in Schritt 110 des Verfahrens 100 das Monomer 2 zugeführt wird, entspricht T_{E} der Umgebungstemperatur. In Schritt 130 wird die Temperatur T_{E} über T_{M} erhöht. Während die Temperatur T_{E} über T_{M} liegt, läuft die Polymerisation 120 ab. Gemäß Schritt 140 wird die Temperatur T_{E} in diesem Ausführungsbeispiel des Verfahrens 100 so lange auf diesem Niveau gehalten, bis das Monomer 2 komplett zum Polymer 3 polymerisiert ist. Anschließend wird die Temperatur T_{E} in Schritt 150 wieder auf Umgebungstemperatur zurückgefahren.

Wenn die thermische Belastung für den Einleger 1 minimiert werden soll, kann alternativ die Temperatur gemäß Schritt 150 bereits dann reduziert werden, wenn das Monomer 2 noch nicht komplett polymerisiert ist, sondern das entstandene Polymer 3 gerade erst die Kontaktfläche 1a zum Einleger 1 vollständig bedeckt. Die Temperatur T_{E} wird dann nicht bis auf Umgebungstemperatur reduziert, sondern auf diejenige Temperatur, die nötig ist, um die Polymerisation 120 abzuschließen.

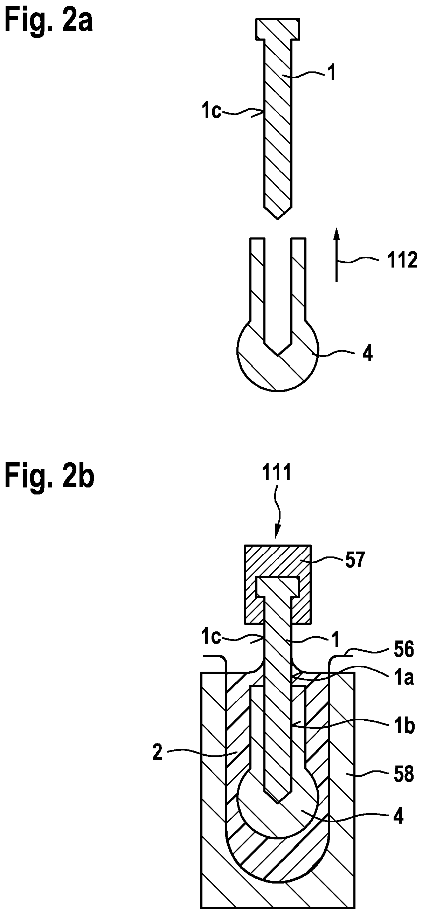

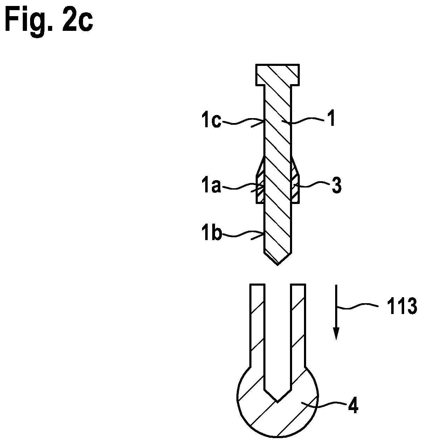

Figur 2 zeigt ein weiteres Ausführungsbeispiel des Verfahrens 100. Nach Figur 2a wird zunächst in Schritt 112 ein Abweiser 4 auf den Einleger 1 aufgesteckt. Wenn der Einleger 1 anschließend gemäß Figur 2b mit dem heizbaren Greifer 57 in das durch die Heizung 58 temperierbare Bad 56 mit dem Monomer 2 getaucht wird (Schritt 111), ist ein Teil 1b der Oberfläche 1c des Einlegers 1 davor geschützt, mit dem Monomer 2 in Kontakt zu gelangen.

An der Kontaktfläche 1a zwischen dem Monomer 2 und dem Einleger 1 polymerisiert das Monomer 2 zu dem Polymer 3 und bildet dort einen festen Überzug. Durch Abziehen des Abweisers 4 in Schritt 113 wird der abgedeckte Bereich 1b wieder freigelegt. Der solchermaßen präparierte Einleger 1 ist oberhalb und unterhalb des mit dem Polymer 3 belegten Bereichs 1a jeweils elektrisch kontaktierbar und kann somit beispielsweise als elektrische Durchführung dienen, die durch das Polymer 3 abgedichtet wird.

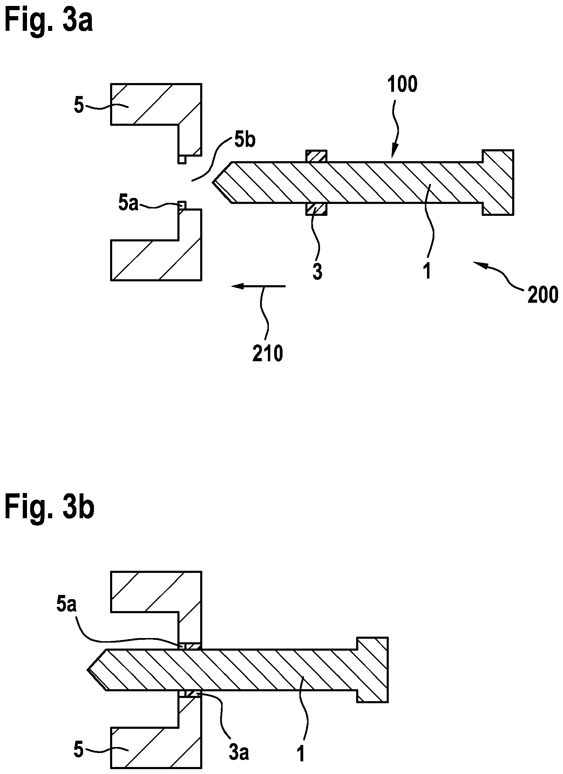

Figur 3a verdeutlicht schematisch ein Ausführungsbeispiel des Verfahrens 200 zur dichtenden Integration des Einlegers 1 in ein Bauteil 5. Das Bauteil 5 weist eine vorbereitete Öffnung 5b für dein Einleger 1 auf, die durch einen Anschlag 5a begrenzt wird. Der Einleger 1 wird zunächst gemäß dem beschriebenen Verfahren 100 mit dem Polymer 3 verbunden und anschließend in Schritt 210 des Verfahrens 200 in die Öffnung 5b eingeschossen.

Figur 3b zeigt das erhaltene Ergebnis. Das Polymer 3 hat sich beim Auftreffen auf den Anschlag 5a in der Öffnung 5b des Bauteils 5 zu einer Dichtung 3a verformt, die den Einleger 1 gegen das Bauteil 5 abdichtet. Der Einleger 1 kann somit beispielsweise als elektrische Durchführung durch das Bauteil 5 dienen.

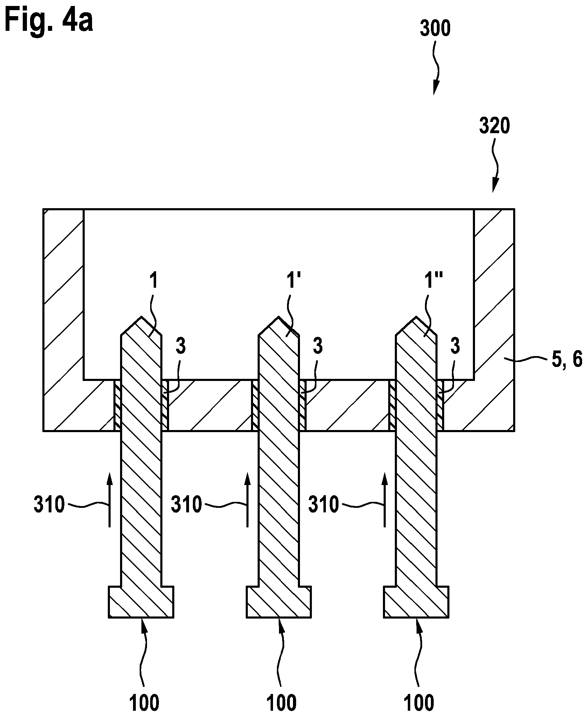

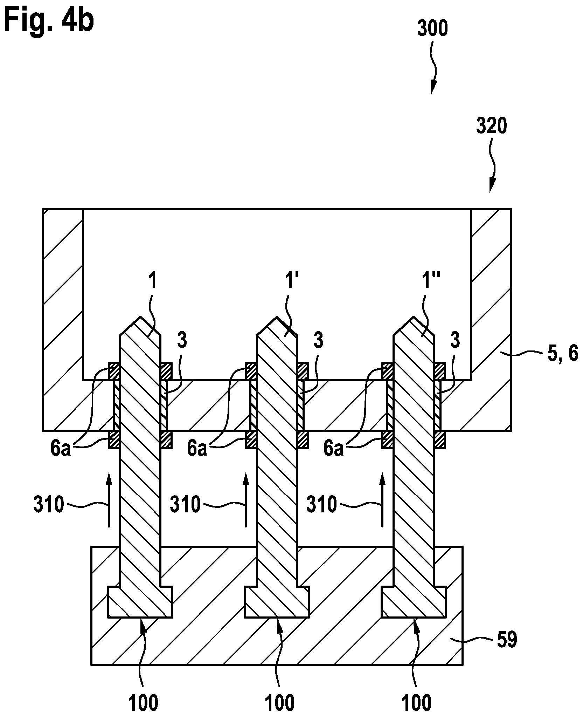

Figur 4 verdeutlicht ein Ausführungsbeispiel des Verfahrens 300, bei dem das Verfahren 100 zur Verbindung dreier Einleger 1, 1' und 1" mit dem Polymer 3 mit Spritzgießen kombiniert wird. Figur 4 zeigt der Übersichtlichkeit halber den Zustand nach dem Erstarren des Kunststoffs 6, der das Bauteil 5 bildet, und Entfernen der Spritzgussform.

Figur 4a zeigt eine erste Variante. In dieser Variante wurden in Schritt 310 des Verfahrens 300 zunächst die gemäß dem Verfahren 100 jeweils mit dem Polymer 3 verbundenen Einleger 1, 1' und 1" in die Gussform für das Bauteil 5 eingeführt. Anschließend wurde in Schritt 320 des Verfahrens 300 der Kunststoff 6 in die Gussform eingeführt. Beim Erstarren des Kunststoffs 6 entstand das Bauteil 5, das jeweils das mit den Einlegern 1, 1' und 1" verbundene Polymer 3 dicht umschließt. Dabei wurde die Dichtwirkung dadurch verstärkt, dass das Polymer 3 jeweils an seiner Oberfläche angeschmolzen wurde.

Figur 4b zeigt eine zweite Variante. In dieser Variante wurden die Einleger 1, 1' und 1" in dem Zustand eingeführt, in dem sie lediglich mit Monomer 2 belegt waren. Mit einer Kühlung 59 wurden die Einleger auf einer Temperatur zwischen 0 und 50 °C gehalten, um zu verhindern, dass das Monomer durch die Temperatur der Gussform von etwa 80 °C bereits beim Einlegen in die Gussform schmolz.

In dieser Variante hat der Wärmeeintrag durch den heißen Kunststoff 6 auch die Polymerisation des Monomers 2 zum in Figur 4b sichtbaren Polymer 3 bewirkt. Damit das Monomer 2 allseitig entweder vom Einleger 1, 1', 1" oder vom heißen Kunststoff 6 umschlossen und somit überall zum Polymer 3 umgewandelt wurde, war die Gussform dahingehend abgeändert, dass sich auch an den in Figur 4b mit 6a bezeichneten Stellen Kunststoff 6 befindet.

Die Kühlung 59 ist sehr dynamisch. Unmittelbar nach dem Einfüllen des heißen Kunststoffs 6 erreicht die Temperatur T_{E} der Einleger 1, 1', 1" etwa 30-50 K über T_{M}. Die Polymerisation des Monomers 2 zum Polymer 3 erst während der Herstellung des Bauteils 5 durch Spritzgießen hat den Vorteil einer noch besseren Abdichtung.

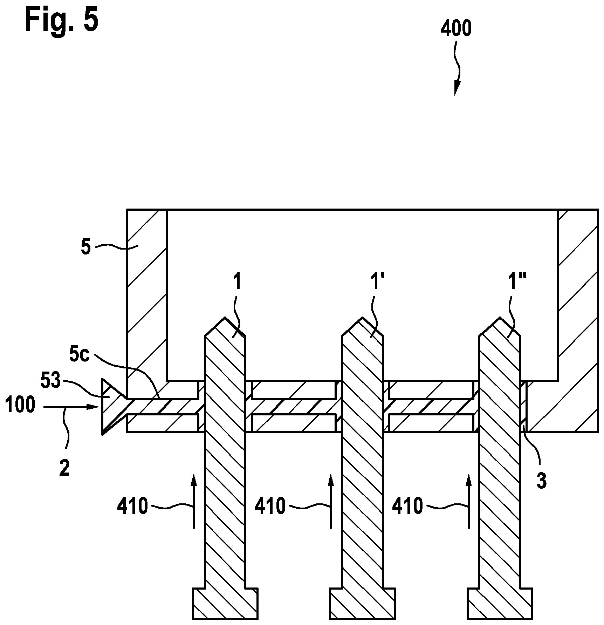

Figur 5 zeigt ein Ausführungsbeispiel des Verfahrens 400, bei dem drei Einleger 1, 1', 1" zunächst in Schritt 410 mit einem spritzgegossenen Bauteil 5 zusammengefügt und anschließend durch das Verfahren 100 mit dem Polymer 3 verbunden werden. Figur 5 zeigt eine Momentaufnahme zu dem Zeitpunkt, zu dem das Monomer 2 über eine Zuführung 53 in den Kanal 5c eingeführt wird. Die Polymerisation kann anschließend über in Figur 5 nicht dargestellte Mittel zur Erhöhung der Temperatur T_{E} der Einleger 1, 1', 1" gestartet werden.

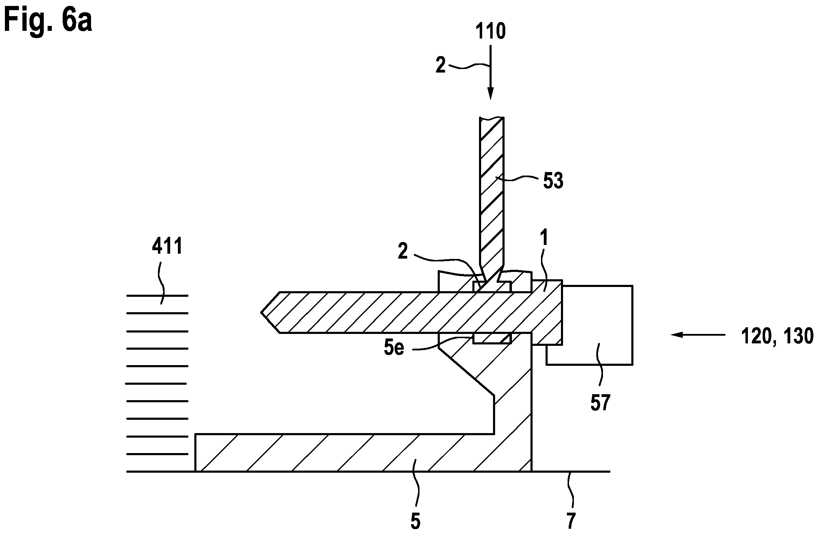

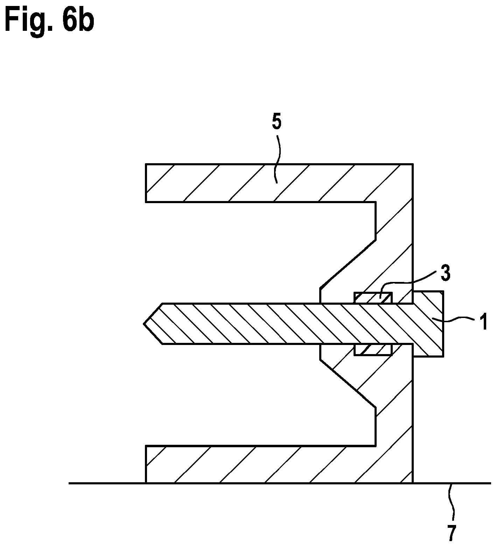

Figur 6 zeigt eine Abwandlung des Verfahrens 400. Im Unterschied zu Figur 5 wird das Bauteil 5 durch schichtweisen Aufbau 411 mittels 3D-Druck auf einer Grundplatte 7 hergestellt. Dabei ist in dem Bauteil 5 ein Raum 5e für die Aufnahme des Monomers 2 freigelassen. Der Einleger 1 wird zu einem geeigneten Zeitpunkt mittels eines heizbaren Greifers 57 hinzugefügt und anschließend vom Material des Bauteils 5 umdruckt. Bevor der Raum 5e völlig verschlossen wird, wird über die Zuführung 53 das Monomer 2 in den Raum 5e eingeführt.

Figur 6a zeigt eine Momentaufnahme zu einem Zeitpunkt, zu dem die Zuführung 110 des Monomers 2 gerade im Gange ist. Zu einem geeigneten Zeitpunkt kann dann durch Erhöhung 130 der Temperatur T_{E} des Einlegers 1 mindestens auf T_{M} die Polymerisation 120 des Monomers 2 zu dem Polymer 3 gestartet werden. Der 3D-Druck 411 des Bauteils 5 kann fortgesetzt werden, während die Polymerisation 120 noch im Gange ist.

Figur 6b zeigt das erhaltene Endergebnis. Der Einleger 1 ist von einem umlaufenden Ring aus dem Polymer 3 umgeben, der dauerhaft gegen den Einleger 1 gedichtet ist. Indem das Polymer 3 wiederum mit dem Material des Bauteils 5 umdruckt wurde, ist es wiederum auch dauerhaft gegen das Bauteil 5 gedichtet. Somit ist der Einleger 1 insgesamt dauerhaft dicht durch die Wand des Bauteils 5 geführt.

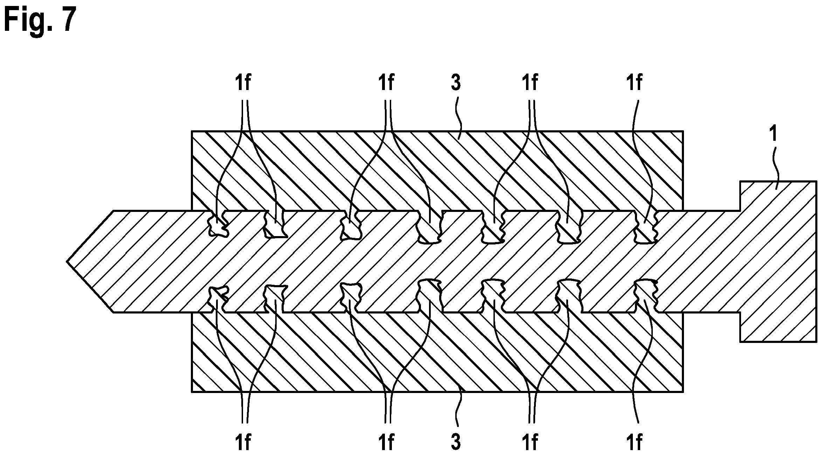

Figur 7 zeigt schematisch, wie der Einleger 1 mit Strukturen 1f versehen werden kann, um die Anhaftung des Polymers 3 zu verbessern. Die Dicke des Polymers 3 und die Größe der Strukturen 1f sind stark übertrieben gezeichnet. Das Polymer 3 greift so in die Strukturen 1f ein, dass eine formschlüssige Verbindung hergestellt wird. Das Polymer 3 kann also nicht mehr vom Einleger 1 abgestreift werden.

## Patentansprüche

1. Verfahren (100) zur Herstellung einer Verbindung zwischen einem Einleger (1, 1', 1") und einem den Einleger zumindest teilweise umgebenden Polymer (3), wobei ein Monomer (2) mit dem Einleger (1, 1', 1") in Kontakt gebracht (110) und anschließend zu dem Polymer (3) polymerisiert wird (120), wobei die Temperatur T_{E} des Einlegers (1, 1', 1") zumindest kurzzeitig mindestens auf diejenige Temperatur T_{M} erhöht wird (130), die das Monomer (2) während seiner exothermen Polymerisation (120) zu dem Polymer (3) maximal annimmt, und/oder die sicherstellt, dass der Wärmestrom immer vom Einleger (1, 1', 1") zum Monomer (2) verläuft, wobei ein zumindest teilweise elektrisch leitender oder halbleitender Einleger (1, 1', 1") gewählt wird,
**dadurch gekennzeichnet, dass** der Einleger (1, 1', 1") durch Beaufschlagung mit einem Strom I resistiv, und/oder induktiv, geheizt wird (131).

2. Verfahren (100) nach Anspruch 1, **dadurch gekennzeichnet, dass** die Temperatur T_{E} des Einlegers (1, 1', 1") mindestens so lange auf oder oberhalb der Temperatur T_{M} gehalten wird (140), bis das Monomer (2) zumindest entlang seiner kompletten Kontaktfläche (1a) zu dem Einleger (1, 1', 1") polymerisiert ist (120).

3. Verfahren (100) nach Anspruch 2, **dadurch gekennzeichnet, dass** die Temperatur T_{E} des Einlegers (1, 1', 1") unter die Temperatur T_{M} abgesenkt wird (150), nachdem das Monomer (2) entlang seiner kompletten Kontaktfläche (1a) zu dem Einleger (1, 1', 1") polymerisiert ist (120) .

4. Verfahren (100) nach einem der Ansprüche 1 bis 3, **dadurch gekennzeichnet, dass** der Einleger (1, 1', 1") in das Monomer (2) eingetaucht wird (111), wobei mindestens ein Bereich (1b) auf der Oberfläche (1c) des Einlegers (1, 1', 1"), der nicht mit dem Polymer (3) umgeben werden soll, mit einem Abweiser (4) abgedeckt wird (112).

5. Verfahren (100) nach einem der Ansprüche 1 bis 4, **dadurch gekennzeichnet, dass** der Einleger (1, 1', 1") mit Strukturen (1f) versehen wird, die nach dem Einbringen des Monomers (2) und dem Polymerisieren (120) des Monomers (2) zu dem Polymer (3) eine formschlüssige Verbindung zwischen dem Einleger (1, 1', 1") und dem Polymer (3) herstellen.

6. Verfahren (200) zur dichtenden Integration eines Einlegers (1, 1', 1") in ein Bauteil (5), **dadurch gekennzeichnet, dass** der Einleger (1, 1', 1") nach dem Verfahren gemäß den Ansprüchen 1 bis 5 mit einem Polymer (3) umgeben und anschließend in das Bauteil (5) eingeschossen wird (210).

7. Verfahren (300) zur dichten Integration eines Einlegers (1, 1', 1") in ein Bauteil (5), **dadurch gekennzeichnet, dass** der Einleger (1, 1', 1") in eine Gussform für die Herstellung des Bauteils (5) eingeführt (310) und durch eine Kombination aus Umspritzen (320) mit einem Kunststoff (6) und Umgeben (100) mit einem Polymer (3) gemäß einem der Ansprüche 1 bis 5 dichtend mit dem aus dem Kunststoff (6) entstehenden Bauteil (5) verbunden wird.

8. Verfahren (300) nach Anspruch 7, **dadurch gekennzeichnet, dass** der Einleger (1, 1', 1") vor dem Einführen (310) in die Gussform mit dem Polymer (3) umgeben wird (100) und das Polymer (3) beim Umspritzen (320) durch Kontakt mit dem Kunststoff teilweise angeschmolzen wird (330).

9. Verfahren (300) nach Anspruch 7, **dadurch gekennzeichnet, dass** der Einleger (1, 1', 1") vor dem Einführen (310) in die Gussform mit dem Monomer (2) umgeben wird (110) und die Temperatur des Einlegers (1, 1', 1") bei oder nach dem Zuführen (320) des Kunststoffs (6) mindestens auf T_{M} erhöht wird, um das Monomer (2) zu dem Polymer (3) zu polymerisieren (120).

10. Verfahren (400) zur dichten Integration eines Einlegers (1, 1', 1") in ein Bauteil (5), **dadurch gekennzeichnet, dass** der Einleger (1, 1', 1") mit dem Bauteil (5) zusammengefügt wird (410) und anschließend nach einem Verfahren gemäß der Ansprüche 1 bis 5 mit einem Polymer (3) verbunden wird (100).

11. Verfahren (400) nach Anspruch 10, **dadurch gekennzeichnet, dass** das Monomer (2) über einen durch das Innere des Bauteils (5) verlaufenden Kanal (5c) mit dem Einleger in Kontakt gebracht wird (110).

12. Verfahren (400) nach einem der Ansprüche 10 bis 11, **dadurch gekennzeichnet, dass** das Bauteil (5) durch 3D-Druck um den Einleger (1, 1', 1") herum aufgebaut wird (411), wobei um den Einleger (1, 1', 1") herum ein Raum (5e) zur Aufnahme des Monomers (2) freigelassen wird und wobei das Monomer (2) in diesen Raum eingebracht wird (110).

## Claims

1. Method (100) for producing a connection between an insert (1, 1', 1'') and a polymer (3) which at least partially surrounds the insert, wherein a monomer (2) is brought into contact (110) with the insert (1, 1', 1") and then polymerized (120) to form the polymer (3), wherein the temperature T_{E} of the insert (1, 1', 1") is increased (130) at least in the short term at least to the maximum temperature T_{M} reached by the monomer (2) during its exothermic polymerization (120) to form the polymer (3), and/or that ensures that heat always flows from the insert (1, 1', 1") to the monomer (2), wherein an at least partially electrically conductive or semiconductive insert (1, 1', 1") is selected,
**characterized in that** the insert (1, 1', 1") is heated (131) resistively, and/or inductively, by having a current I applied to it.

2. Method (100) according to Claim 1, **characterized in that** the temperature T_{E} of the insert (1, 1', 1'') is kept (140) at or above the temperature T_{M} at least until the monomer (2) is polymerized (120) at least along its entire contact surface (1a) with the insert (1, 1', 1'').

3. Method (100) according to Claim 2, **characterized in that** the temperature T_{E} of the insert (1, 1', 1'') is lowered (150) below the temperature T_{M}, after the monomer (2) has been polymerized (120) along its entire contact surface (1a) with the insert (1, 1', 1").

4. Method (100) according to one of Claims 1 to 3, **characterized in that** the insert (1, 1', 1") is dipped (111) into the monomer (2), wherein at least one region (1b) on the surface (1c) of the insert (1, 1', 1") that is not to be surrounded by the polymer (3) is covered (112) by a deflector (4) .

5. Method (100) according to one of Claims 1 to 4, **characterized in that** the insert (1, 1', 1") is provided with structures (1f) which produce a form-fitting connection between the insert (1, 1', 1") and the polymer (3) after the monomer (2) has been introduced and the monomer (2) has been polymerized (120) to form the polymer (3).

6. Method (200) for the sealing integration of an insert (1, 1', 1") in a component (5), **characterized in that** the insert (1, 1', 1") is surrounded with a polymer (3) and then enclosed (210) in the component (5) by the method according to Claims 1 to 5.

7. Method (300) for sealingly integrating an insert (1, 1', 1") in a component (5), **characterized in that** the insert (1, 1', 1") is introduced (310) into a casting mould for the production of the component (5) and sealingly connected, by a combination of encapsulation (320) with a plastic (6) by injection moulding and surrounding (100) with a polymer (3) according to one of Claims 1 to 5, to the component (5) produced from the plastic (6).

8. Method (300) according to Claim 7, **characterized in that** the insert (1, 1', 1") is surrounded (100) with the polymer (3) before introduction (310) into the casting mould and the polymer (3) is partially melted (330) by contact with the plastic during the encapsulation (320) by injection moulding.

9. Method (300) according to Claim 7, **characterized in that** the insert (1, 1', 1") is surrounded (110) with the monomer (2) before introduction (310) into the casting mould and the temperature of the insert (1, 1', 1") is increased at least to Tₘ during or after the feeding (320) of the plastic (6), in order to polymerize (120) the monomer (2) to form the polymer (3).

10. Method (400) for sealingly integrating an insert (1, 1', 1") in a component (5), **characterized in that** the insert (1, 1', 1") is joined (410) to the component (5) and then connected (100) to a polymer (3) by a method according to Claims 1 to 5.

11. Method (400) according to Claim 10, **characterized in that** the monomer (2) is brought into contact (110) with the insert through a channel (5c) running through the interior of the component (5).

12. Method (400) according to either of Claims 10 and 11, **characterized in that** the component (5) is built up (411) around the insert (1, 1', 1") by 3D printing, wherein a space (5e) for receiving the monomer (2) is left free around the insert (1, 1', 1") and wherein the monomer (2) is introduced (110) into this space.

## Revendications

1. Procédé (100) de fabrication d'une liaison entre un insert (1, 1', 1'') et un polymère (3) entourant au moins partiellement l'insert, un monomère (2) étant mis en contact (110) avec l'insert (1, 1', 1") et étant ensuite polymérisé (120) en le polymère (3), la température T_{E} de l'insert (1, 1', 1'') étant augmentée (130) au moins brièvement au moins à la température T_{M} que le monomère (2) prend au maximum pendant sa polymérisation exothermique (120) en le polymère (3), et/ou qui assure que le courant chaud passe toujours de l'insert (1, 1', 1'') au monomère (2), un insert (1, 1', 1'') au moins partiellement électriquement conducteur ou semiconducteur étant choisi, **caractérisé en ce que** l'insert (1, 1', 1'') est chauffé (131) de manière résistive, et/ou inductive, par application d'un courant I.

2. Procédé (100) selon la revendication 1, **caractérisé en ce que** la température T_{E} de l'insert (1, 1', 1'') est maintenue (140) à ou au-dessus de la température T_{M} au moins jusqu'à ce que le monomère (2) soit polymérisé (120) au moins le long de sa surface de contact complète (1a) avec l'insert (1, 1', 1").

3. Procédé (100) selon la revendication 2, **caractérisé en ce que** la température T_{E} de l'insert (1, 1', 1'') est abaissée (150) en dessous de la température T_{M} après que le monomère (2) a été polymérisé (120) le long de sa surface de contact complète (1a) avec l'insert (1, 1', 1").

4. Procédé (100) selon l'une quelconque des revendications 1 à 3, **caractérisé en ce que** l'insert (1, 1', 1'') est immergé (111) dans le monomère (2), au moins une zone (1b) sur la surface (1c) de l'insert (1, 1', 1'') qui ne doit pas être entourée par le polymère (3) étant recouverte (112) par un déflecteur (4).

5. Procédé (100) selon l'une quelconque des revendications 1 à 4, **caractérisé en ce que** l'insert (1, 1', 1") est pourvu de structures (1f) qui, après l'introduction du monomère (2) et la polymérisation (120) du monomère (2) en le polymère (3), créent une liaison par complémentarité de forme entre l'insert (1, 1', 1") et le polymère (3).

6. Procédé (200) d'intégration étanche d'un insert (1, 1', 1'') dans un composant (5), **caractérisé en ce que** l'insert (1, 1', 1") est entouré d'un polymère (3) par le procédé selon les revendications 1 à 5 et est ensuite incorporé (210) dans le composant (5).

7. Procédé (300) d'intégration étanche d'un insert (1, 1', 1'') dans un composant (5), **caractérisé en ce que** l'insert (1, 1', 1") est introduit (310) dans un moule de coulée pour la fabrication du composant (5) et, par une combinaison de surmoulage (320) avec une matière plastique (6) et d'entourage (100) avec un polymère (3) selon l'une quelconque des revendications 1 à 5, est relié de manière étanche au composant (5) formé à partir de la matière plastique (6).

8. Procédé (300) selon la revendication 7, **caractérisé en ce que** l'insert (1, 1', 1") est entouré (100) par le polymère (3) avant l'introduction (310) dans le moule de coulée et le polymère (3) est partiellement fondu (330) par contact avec la matière plastique lors du surmoulage (320) .

9. Procédé (300) selon la revendication 7, **caractérisé en ce que** l'insert (1, 1', 1") est entouré (110) par le monomère (2) avant l'introduction (310) dans le moule de coulée et la température de l'insert (1, 1', 1'') est augmentée au moins jusqu'à T_{M} pendant ou après l'amenée (320) de la matière plastique (6) pour polymériser (120) le monomère (2) en le polymère (3).

10. Procédé (400) d'intégration étanche d'un insert (1, 1', 1'') dans un composant (5), **caractérisé en ce que** l'insert (1, 1', 1'') est assemblé (410) avec le composant (5) et ensuite relié (100) à un polymère (3) par un procédé selon les revendications 1 à 5.

11. Procédé (400) selon la revendication 10, **caractérisé en ce que** le monomère (2) est mis en contact (110) avec l'insert par l'intermédiaire d'un canal (5c) traversant l'intérieur du composant (5).

12. Procédé (400) selon l'une quelconque des revendications 10 à 11, **caractérisé en ce que** le composant (5) est construit (411) par impression 3D autour de l'insert (1, 1', 1"), un espace (5e) étant laissé autour de l'insert (1, 1', 1") pour recevoir le monomère (2) et le monomère (2) étant introduit (110) dans cet espace.
